# EUROPEAN PATENT SPECIFICATION

(11) **EP 4 280 172 B1**
(45) Date of publication and mention of the grant of the patent: **17.12.2025**
(21) Application number: 23174290.9
(22) Date of filing: 19.05.2023
(51) Int. Cl.: G06V 10/764, G06V 10/82, G07C 5/08

(54) **VEHICLE FAULT DIAGNOSIS METHOD, DEVICE, AND COMPUTER-READABLE STORAGE MEDIUM**
VERFAHREN, VORRICHTUNG UND COMPUTERLESBARES SPEICHERMEDIUM ZUR DIAGNOSE VON FAHRZEUGFEHLERN
PROCÉDÉ DE DIAGNOSTIC DE DÉFAILLANCE DE VÉHICULE, DISPOSITIF ET SUPPORT D'INFORMATIONS LISIBLE PAR ORDINATEUR

(30) Priority: 19.05.2022 CN 202210543427
(43) Date of publication of application: 22.11.2023
(73) Proprietor: XPT EDS (Hefei) Co., Ltd., Hefei, Anhui 230601 (CN)
(72) Inventor: GONG, Xin, Hefei, Anhui (CN); WANG, Kai, Hefei, Anhui (CN)
(74) Representative: Vossius & Partner Patentanwälte Rechtsanwälte mbB

(56) References cited:
- US-A1- 2011 238 258
- SATYA P SINGH ET AL: "Deep ConvLSTM with self-attention for human activity decoding using wearables", ARXIV.ORG, CORNELL UNIVERSITY LIBRARY, 201 OLIN LIBRARY CORNELL UNIVERSITY ITHACA, NY 14853, 2 May 2020 (2020-05-02), XP081841585, DOI: 10.1109/JSEN.2020.3045135
- \'ELOI ZABLOCKI ET AL: "Explainability of vision-based autonomous driving systems: Review and challenges", ARXIV.ORG, CORNELL UNIVERSITY LIBRARY, 201 OLIN LIBRARY CORNELL UNIVERSITY ITHACA, NY 14853, 13 January 2021 (2021-01-13), XP081858824

## Description

### Technical Field

The disclosure relates to the field of vehicle fault diagnosis, and specifically to a vehicle fault diagnosis method and device, and a computer-readable storage medium.

### Background Art

In big data analysis of new energy vehicles, conventional methods for multivariate (that is, multiple sources) time series data analysis are limited by their dependence on expert experience, and thus may be unable to find information outside the realm of experience. In addition, classification results of conventional methods cannot be well explained, which results in a relatively low iterative update speed of machine learning, and further makes it not robust enough after data sample distribution shifts.

In view of this, there is a need for an improved mechanism that can improve vehicle fault diagnosis.
US 2011/0238258A1 discloses a system and method for diagnosing fault conditions in a vehicle. Specifically, it discloses a system begins with failure-mode-specific data matrices, which contain data only for events found to be attributed to one specific failure mode. The system includes a feature extraction module used to identify features of the data from the data matrices, and a data classifier module which receives the features and performs a classification by e.g. probabilistic neural networks. Besides, to achieve the desired objective, it proposes a three-dimensional data matrix used for collecting and organizing event-driven fault data, which includes vehicles as a first dimension, DTCs as a second dimension, and parameter identification data as a third dimension.
The article "Deep ConvLSTM with self-attention for human activity decoding using wearables" by Satya P. Singh et al (arXiv.org, Cornell University Library, 201 Olin Library Cornell University Ithaca, NY 14853, 2 May) proposes a deep neural network architecture that not only captures the spatio-temporal features of multiple sensor time-series data but also selects, learns important time points by utilizing a self-attention mechanism.
The article "Explainability of vision-based autonomous driving systems: Review and challenges" by Éloi Zablocki et al (arXiv.org, Cornell University Library, 201 Olin Library Cornell University Ithaca, NY 14853, 13 January 2021) organizes and details methods providing explanations to a black-box self-driving system in a post-hoc fashion, and presents approaches from the literature that aim at building more interpretable self-driving systems by design.

### Summary

Embodiments of the disclosure provide a vehicle fault diagnosis method and device, and a computer-readable storage medium, to improve the efficiency and accuracy of vehicle fault diagnosis. The subject-matter of the present invention is defined by the features of the independent claims. Further preferred embodiments of the present invention are defined in the dependent claims.

According to an aspect of the disclosure, there is provided a vehicle fault diagnosis method according to claim 1.

In some embodiments of the disclosure, optionally, the self-attention-based processing includes the following steps: inputting the feature map into a multi-head attention layer of a self-attention neural network to extract a feature matrix; inputting the feature matrix into a dense layer of the self-attention neural network to generate a sparse matrix; and inputting the sparse matrix into a fully connected and softmax layer of the self-attention neural network to obtain the classification result.

In some embodiments of the disclosure, optionally, the grayscale image is generated by the following steps: extracting the diagnostic data; selecting valid data within a predetermined time period from the diagnostic data by filtering; normalizing each value in the valid data; mapping each normalized value in the valid data to a gray level of the grayscale image; and constructing the grayscale image based on the corresponding gray level of each normalized value in the valid data, where the grayscale image has a first dimension corresponding to the source and a second dimension corresponding to the time point.

In some embodiments of the disclosure, optionally, generating the grayscale image further includes the following steps: supplementing a normalized value for each source during a power-off time period after the normalization; and performing filtering on each normalized value in the valid data.

In some embodiments of the disclosure, optionally, the method further includes the following steps: receiving a sample grayscale image and a sample classification result corresponding thereto, where the sample grayscale image represents sample data for vehicle diagnosis, and the sample classification result indicates a vehicle fault condition; and training the convolutional neural network and the self-attention neural network by using the sample grayscale image as an input of the convolutional neural network and the sample classification result as a target output of the self-attention neural network.

In some embodiments of the disclosure, optionally, the sample data is data within a predetermined time period that ends at a time point at which occurrence of a fault is determined according to empirical rules, and the sample classification result is a vehicle fault condition determined according to the empirical rules.

In some embodiments of the disclosure, optionally, the performing a relevance propagation analysis based on the classification result to obtain a contribution heat map includes: performing the relevance propagation analysis based on the classification result by using a relevance analysis neural network, where the relevance analysis neural network includes corresponding layers respectively coupled with all layers in the convolutional neural network and with all the layers in the self-attention neural network.

In some embodiments of the disclosure the diagnostic data is generated based on sensor data of a vehicle.

According to another aspect of the disclosure, there is provided a computer-readable storage medium according to claim 9.

According to another aspect of the disclosure, there is provided a vehicle diagnosis device according to claim 10.

### Brief Description of the Drawings

The above and other objectives and advantages of the disclosure will be more thorough and clearer from the following detailed description in conjunction with the drawings, where the same or similar elements are represented by the same reference numerals.
FIG. 1 shows a vehicle fault diagnosis method according to an embodiment of the disclosure;
FIG. 2 shows a vehicle diagnosis device according to an embodiment of the disclosure;
FIG. 3 shows a grayscale image according to an embodiment of the disclosure; and
FIG. 4 shows a neural network architecture of according to an embodiment of the disclosure.

### Detailed Description of Embodiments

For the sake of brevity and illustrative purposes, the principles of the disclosure are mainly described herein with reference to its exemplary embodiments. However, those skilled in the art can easily appreciate that the same principle can be equivalently applied to all types of vehicle fault diagnosis methods and devices, and computer-readable storage media, and a same or similar principle can be implemented therein. These variations do not depart from the scope of the disclosure.

In the context of the disclosure, unless otherwise specified, vehicle fault diagnosis may refer to a diagnosis on a vehicle in which a fault has occurred, or may refer to a predictive diagnosis on a vehicle in which no fault occurs.

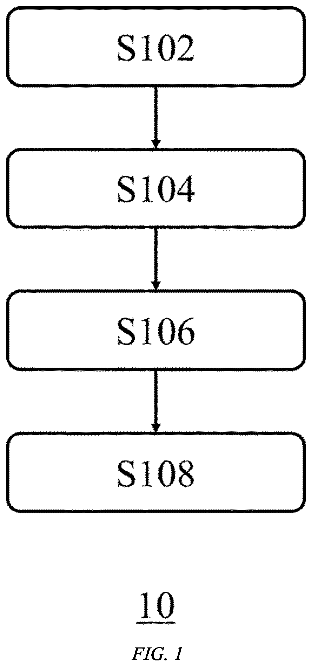

An aspect of the disclosure provides a vehicle fault diagnosis method. As shown in FIG. 1, the vehicle fault diagnosis method 10 includes the following steps: step S102: receiving a grayscale image; step S104: extracting features from the grayscale image by using a convolutional neural network, to generate a feature map; step S106: performing self-attention-based processing on the feature map to obtain a classification result; and step S108: performing a relevance propagation analysis based on the classification result to obtain a contribution heat map. The execution sequence shown by the arrows in FIG. 1 is mainly intended to describe an information flow of products of the various steps. Although the sequence in which the various steps are performed is shown in FIG. 1, this is illustrative only, and these steps may be performed approximately simultaneously in some embodiments. In some other embodiments, these steps may be performed in an interleaved manner.

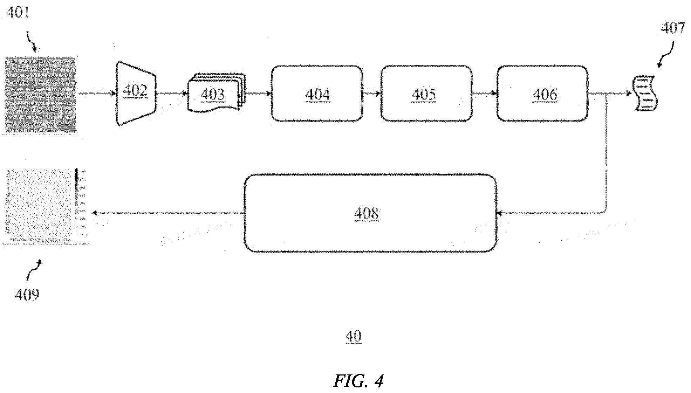

In addition, FIG. 4 shows a neural network architecture 40 according to an embodiment of the disclosure, which may be used to perform the vehicle fault diagnosis method 10 shown in FIG. 1. Some embodiments below will be described with reference to FIG. 1 and FIG. 4, so as to describe the principles of the disclosure in as much detail as possible. It should be noted that the vehicle fault diagnosis method 10 does not necessarily rely on the neural network architecture 40, and in some cases, other forms of neural network architectures may be used to perform the vehicle fault diagnosis method 10 shown in FIG. 1.

In the vehicle fault diagnosis method 10, a grayscale image is received in step S102. The grayscale image described in the disclosure may represent diagnostic data used for vehicle diagnosis, and the diagnostic data may be expressed as numerical values that represent physical quantities in a specific environment. In other words, the grayscale image is a visual representation of the diagnostic data and may also be used as an input of a convolutional neural network 402, for example, in the neural network architecture 40 shown in FIG. 4. In this case, the convolutional neural network 402 will perform vision-based neural network processing.

Since an actual fault in the vehicle is correlated with various physical quantities in a specific environment, there is an objective correlation between the diagnostic data and the vehicle fault, and therefore the diagnostic data can be used to analyze the condition of the vehicle fault. For example, the diagnostic data may include a deflection angle of a steering gear, and the data may be used to analyze a steering fault. Since there is a correlation between the diagnostic data and the vehicle fault, there is also a correlation between the vehicle fault and the grayscale image generated based on the diagnostic data. The analysis on the grayscale image provides a possibility of determining vehicle faults based on data.

In some embodiments of the disclosure, the diagnostic data is generated based on sensor data of a vehicle. With continued reference to the above example, the deflection angle of the steering gear may be collected by, for example, an angular deflection sensor. In some other examples, the diagnostic data may alternatively be collected by, for example, a position sensor, an acceleration sensor, a temperature sensor, etc. Certainly, the diagnostic data may alternatively be obtained from other sources. For example, a motor torque may be generated according to a torque instruction, and thus the torque instruction may also be used to generate diagnostic data for representing the motor torque.

It is worth mentioning that the sensor data of the vehicle may include many types of sensor data, but not every type of sensor data needs to be considered as diagnostic data. Those skilled in the art may select necessary sensor data as a basis for diagnostic data according to experience, causality, etc. after reading the disclosure. For example, it may not be necessary to consider opening or closing of a sunroof when determining whether there is a steering fault, and therefore data of a sunroof sensor may not be included in diagnostic data used for determining whether there is a steering fault.

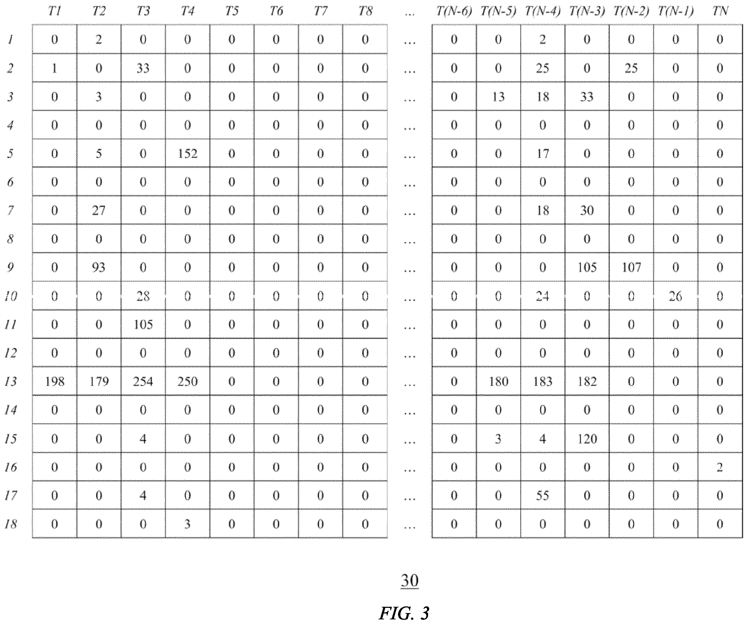

As recited above, the grayscale image may represent diagnostic data. For example, FIG. 3 shows an example of a grayscale image, where each square represents one pixel, and a number inside each square represents a grayscale value of a current pixel (for example, in the case of eight-bit grayscale, the grayscale value ranges from 0 to 255). The grayscale image 30 shown in this figure has 18 rows and N columns, where the 18 rows correspond to 18 sources of diagnostic data, and the N columns represent N time points when the diagnostic data is collected.

In some other examples, the grayscale image 30 shown in FIG. 3 may be further processed. For example, the N columns of the grayscale image 30 are divided into a plurality of groups, and the divided groups are presented as new rows on the grayscale image. As an example, if N is set to be a multiple of 3, the N columns may be divided into three groups, and each group includes (N/3) columns. The divided groups are arranged in the row direction, and therefore the grayscale image after the rearrangement includes (18 x 3) rows. This division method facilitates a visual presentation of diagnostic data.

In some embodiments of the disclosure, the grayscale image received in step S102 may be generated by the following steps. First, diagnostic data may be extracted from, for example, an on-board diagnostics (OBD) interface of a vehicle. As described above in connection with the example in FIG. 3, the diagnostic data may include data generated by at least one source in the vehicle at a plurality of time points. Specifically, corresponding diagnostic data for the grayscale image 30 shown in FIG. 3 includes data generated by 18 sources in the vehicle at N time points.

Second, valid data within a predetermined time period may be selected from the diagnostic data by filtering. With continued reference to the example in FIG. 3, if diagnostic data is extracted at a moment TN, data within a time period from the moment T1 to the moment TN may be selected as the valid data and data within a time period before the moment T1 may be discarded. This is because earlier data is less correlated with a fault that may occur at the moment TN. In addition, diagnostic data collected after a fault occurs generally exists as a result of the fault, and thus may not be used to analyze causes of the fault in some examples.

Next, each value in the valid data may be normalized. Generally, the data from the various sources have a specific range of values. In order to visualize the data conveniently, the values of these valid data may be mapped to an interval of such as [0, 1]. A mapping method may be, for example, linear mapping, exponential mapping, logarithmic mapping, trigonometric mapping, etc. Normalizing the data from different sources also provides a possibility to map the data to grayscale values of pixels subsequently, so that data from each source may be expressed as grayscale values ranging from 0 to 255.

Then, each normalized value in the valid data may be mapped to a gray level of the grayscale image. For example, values in an interval of [0, 1] may be uniformly mapped to the gray levels ranging from 0 to 255 (eight-bit grayscale). In some other embodiments, the mapping from the normalized values to the grayscale values may alternatively be non-uniform mapping.

Finally, the grayscale image may be constructed based on the corresponding gray level of each normalized value in the valid data. In this way, the grayscale image has a first dimension corresponding to the source (18 rows shown in FIG. 3) and a second dimension corresponding to the time point (N columns shown in FIG. 3).

In some embodiments of the disclosure, the process of generating the grayscale image further includes the following steps. A normalized value for each source during a power-off time period is supplemented after the normalization. Filtering is performed on each normalized value in the valid data, for example, apparently inappropriate values may be filtered out. In this way, supplement to and filtering of the diagnostic data may be implemented, such that the generated grayscale image can reflect changes in the physical environment more accurately, rather than being limited to data fed back by sensors that may include some defects.

With continued reference to the example in FIG. 3, for example, a time period from the time point T5 to the time point T8 in the grayscale image 30 is a power-off time period of the vehicle. In this case, the interval from the time point T5 to the time point T8 may be filled with normalized values belonging to the interval of [0, 1], so as to ensure the continuity of the data. FIG. 3 shows that normalized values of 0s are supplemented for the sources 1 to 18, making the data continuous. In addition, the consecutive 0s may also indicate a power-off parking state of the vehicle. In some other examples, a filling method may alternatively be filling with a typical value (for example, filling with a value with the highest occurrence frequency to make the data continuous and to indicate the power-off parking state of the vehicle), linear interpolation filling, etc.

With continued reference to FIG. 1, in step S104 of the vehicle fault diagnosis method 10, features are extracted from the grayscale image by using a convolutional neural network, to generate a feature map. As shown in FIG. 4, the convolutional neural network 402 in the neural network architecture 40 uses a grayscale image 401 as an input and processes it to generate a feature map 403. The convolutional neural network 402 is adapted to process image information (for example, the grayscale image 401), and it may have a variety of existing structures, and may alternatively have a specially customized structure. The basic principles of the convolutional neural network 402 are already known to most skilled in the art, and may not be repeated herein in the disclosure.

With continued reference to FIG. 1, in step S106 of the vehicle fault diagnosis method 10, self-attention-based processing is performed on the feature map to obtain a classification result, where the classification result indicates a vehicle fault condition. Specifically, in step S106, a plurality of layers such as the layers 404, 405, and 406 in the neural network architecture 40 shown in FIG. 4 may be used to implement self-attention-based classification, to obtain a classification result 407. The number of classification results 407 may vary depending on the type of fault diagnosis that needs to be implemented.

In some embodiments of the disclosure, in step S106, the self-attention-based processing may be completed by using a self-attention neural network including a multi-head attention layer 404, a dense layer 405, and a fully connected and softmax layer 406, and the processing process may include the following steps.

First, the feature map is inputted into the multi-head attention layer 404 of the self-attention neural network to extract a feature matrix, where the feature matrix is used as an output of the multi-head attention layer 404. The multi-head attention layer 404 may not change the scale of the feature map, that is, the generated feature matrix may have the same dimension as the feature map.

Then, the feature matrix is inputted into the dense layer 405 of the self-attention neural network to generate a sparse matrix, where the sparse matrix is used as an output of the dense layer 405. The dense layer 405 makes the original feature matrix sparse and abstract, thereby reducing the dimension of the feature matrix.

Finally, the sparse matrix is inputted into the fully connected and softmax layer 406 of the self-attention neural network to obtain the classification result 407. For example, to implement binary classification of a specific fault, the classification result 407 may be a probability value. If the probability value is greater than or equal to 0.5, it may be determined that the specific fault has occurred (the vehicle fault diagnosis method 10 is used for attribution), or that the specific fault is about to occur (the vehicle fault diagnosis method 10 is used for prediction).

It should be noted that the implementation of the self-attention-based processing by using the architecture composed of the multi-head attention layer 404, the dense layer 405, and the fully connected and softmax layer 406 is only an example, and another architecture may alternatively be used in other embodiments to achieve this purpose.

With continued reference to FIG. 1, in step S108 of the vehicle fault diagnosis method 10, a relevance propagation analysis is performed based on the classification result to obtain a contribution heat map. The method of presenting data in a heat map has been widely used in map hotspot presentation, relevance presentation, etc., and its basic principles have already been well-known to those skilled in the art. As shown in FIG. 4, the contribution heat map 409 may indicate a degree of contribution of each pixel in the grayscale image to the classification result. The contribution analysis is helpful to find the cause of the vehicle fault. For example, if a classification result for a specific fault shows that there is such a fault, and it indicates, based on the contribution heat map 409, that a degree of contribution of the source 17 at the time point T7 is relatively large, it may be inferred that a corresponding operation for hardware corresponding to the source 17 caused this fault at the time point T7. Therefore, those skilled may further analyze, based on the inferred result, whether the attribution of the degree of contribution given in the vehicle fault diagnosis method 10 is appropriate.

In some embodiments of the disclosure, the relevance propagation analysis performed based on the classification result in step S108 may be performed by using a relevance analysis neural network 408 shown in FIG. 4. For example, the relevance analysis neural network 408 may include corresponding layers respectively coupled with all layers (not shown) in the convolutional neural network 402 and with all the layers (the multi-head attention layer 404, the dense layer 405, and the fully connected and softmax layer 406) in the self-attention neural network.

In some examples, each of the corresponding layers in the relevance analysis neural network 408 may have the same structure as the corresponding layer (not shown) in the convolutional neural network 402 and the corresponding layer (the multi-head attention layer 404, the dense layer 405, or the fully connected and softmax layer 406) in the self-attention neural network, and an additional return method is added to transfer intermediate variables in these layers to the corresponding layers in the relevance analysis neural network 408.

In some embodiments of the disclosure, the vehicle fault diagnosis method 10 may further include a process (not shown in FIG. 1) of training, for example, the convolutional neural network 402 and the self-attention neural network (including the multi-head attention layer 404, the dense layer 405, and the fully connected and softmax layer 406) that are shown in FIG. 4. The training process includes: receiving a sample grayscale image and a sample classification result corresponding thereto, where the sample grayscale image represents sample data for vehicle diagnosis, and the sample classification result indicates a vehicle fault condition. In some embodiments of the disclosure, the sample data is data within a predetermined time period that ends at a time point at which occurrence of a fault is determined according to empirical rules, and the sample classification result is a vehicle fault condition determined according to the empirical rules. In this field, the vehicle fault condition determined according to empirical rules may also be used to label the sample data.

Then, in the training process, the convolutional neural network and the self-attention neural network are trained by using the sample grayscale image as an input of the convolutional neural network and the sample classification result as a target output of the self-attention neural network. After the training using the sample grayscale image and the sample classification result, the neural network architecture 40 finally will tend to converge, and each parameter obtained through the training may be solidified and copied for distribution on a neural network architecture based on similar hardware.

According to another aspect of the disclosure, there is provided a computer-readable storage medium having instructions stored therein, where the instructions, when executed by a processor, cause the processor to perform any one of the vehicle fault diagnosis methods as described above. The computer-readable medium in the disclosure includes various types of computer storage media, and may be any usable medium accessible to a general-purpose or special-purpose computer. For example, the computer-readable medium may include a RAM, a ROM, an EPROM, an EEPROM, a register, a hard disk, a removable hard disk, a CD-ROM or another optical memory, a magnetic disk memory or another magnetic storage device, or any other transitory or non-transitory media that can carry or store expected program code having an instruction or data structure form and be accessible to the general-purpose or special-purpose computer or a general-purpose or special-purpose processor. Data is usually copied magnetically in a disk used herein, while data is usually copied optically by using lasers in a disc. A combination thereof shall also fall within the scope of protection of the computer-readable media. An exemplary storage medium is coupled to a processor, so that the processor can read information from and write information to the storage medium. In an alternative solution, the storage medium may be integrated into the processor. The processor and the storage medium may reside in an ASIC. The ASIC may reside in a user terminal. In an alternative solution, the processor and the storage medium may reside as discrete assemblies in a user terminal.

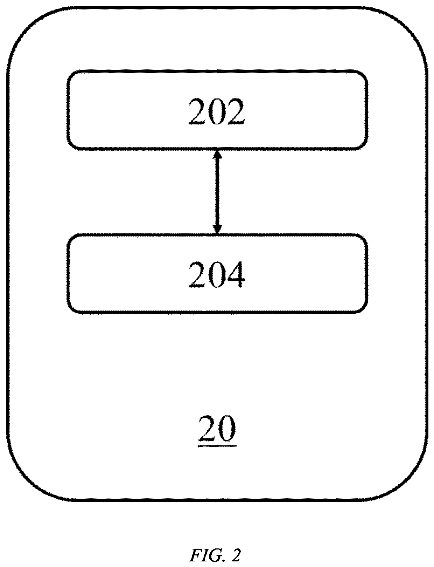

According to another aspect of the disclosure, there is provided a vehicle diagnosis device. As shown in FIG. 2, a vehicle diagnosis device 20 includes a memory 202 and a processor 204. As shown by the arrows in FIG. 2, the processor 204 may read data in the memory 202 and may also write data into the memory 202. The vehicle diagnosis device 20 may further include another software and hardware module, and for the sake of clearly describing the principles of the disclosure, descriptions of these modules are omitted herein. The memory 202 of the vehicle diagnosis device 20 is configured to store instructions, and the processor 204 is configured to execute these instructions to cause the processor 204 to perform any one of the vehicle fault diagnosis methods as described above.

The disclosure integrates the convolutional neural network (visual processing), attention neural network (semantic processing), and a solubility mechanism based on correlation propagation of hierarchical optimization, which implements classification prediction/attribution for multivariate time series signals. In addition, the contribution to the obtained prediction result is also visualized, providing convenience for big data mining in fields such as new energy vehicles. This can be applied to new energy vehicle after-sales problem localization, warning systems, etc. The foregoing descriptions are merely the embodiments of the disclosure, but are not intended to limit the scope of protection of the disclosure. Any feasible variation or replacement conceived by a person skilled in the art within the technical scope disclosed in the disclosure shall fall within the scope of protection of the disclosure. Without conflicts, the embodiments of the disclosure and features in the embodiments may also be combined with each other. The scope of protection of the disclosure shall be subject to recitations of the claims.

## Claims

1. A vehicle fault diagnosis method (10), comprising:
receiving a grayscale image (30, 401), wherein the grayscale image (30, 401) represents diagnostic data for vehicle diagnosis;
extracting features from the grayscale image (30, 401), to generate a feature map (403);
performing processing on the feature map to obtain a classification result (407), wherein the classification result (407) indicates a vehicle fault condition;
**characterized in that**
the diagnostic data comprises data generated by at least one source in a vehicle at a plurality of time points;
the features are extracted from the grayscale image (30, 401) by using a convolutional neural network (402);
the classification result (407) is obtained by performing self-attention-based processing on the feature map (403); and
the method further comprises:
performing a relevance propagation analysis based on the classification result (407) to obtain a contribution heat map (409), wherein the contribution heat map (409) indicates a degree of contribution of each pixel in the grayscale image (30, 401) to the classification result (407).

2. The method according to claim 1, wherein the self-attention-based processing comprises:
inputting the feature map (403) into a multi-head attention layer (404) of a self-attention neural network to extract a feature matrix;
inputting the feature matrix into a dense layer (405) of the self-attention neural network to generate a sparse matrix; and
inputting the sparse matrix into a fully connected and softmax layer (406) of the self-attention neural network to obtain the classification result (407).

3. The method according to claim 1 or 2, wherein the grayscale image (30, 401) is generated by the following steps:
extracting the diagnostic data;
selecting valid data within a predetermined time period from the diagnostic data by filtering;
normalizing each value in the valid data;
mapping each normalized value in the valid data to a gray level of the grayscale image (30, 401); and
constructing the grayscale image (30, 401) based on the corresponding gray level of each normalized value in the valid data, wherein the grayscale image (30, 401) has a first dimension corresponding to the source and a second dimension corresponding to the time point.

4. The method according to claim 3, wherein generating the grayscale image (30, 401) further comprises the following steps:
supplementing a normalized value for each source during a power-off time period after the normalization; and
performing filtering on each normalized value in the valid data.

5. The method according to claim 1 or 2, further comprising:
receiving a sample grayscale image (30, 401) and a sample classification result (407) corresponding thereto, wherein the sample grayscale image (30, 401) represents sample data for vehicle diagnosis, and the sample classification result (407) indicates a vehicle fault condition; and
training the convolutional neural network (402) and the self-attention neural network by using the sample grayscale image (30, 401) as an input of the convolutional neural network (402) and the sample classification result (407) as a target output of the self-attention neural network.

6. The method according to claim 5, wherein the sample data is data within a predetermined time period that ends at a time point at which occurrence of a fault is determined according to empirical rules, and the sample classification result (407) is a vehicle fault condition determined according to the empirical rules.

7. The method according to claim 1 or 2, wherein the performing a relevance propagation analysis based on the classification result (407) to obtain a contribution heat map (409) comprises:
performing the relevance propagation analysis based on the classification result (407) by using a relevance analysis neural network (408), wherein
the relevance analysis neural network (408) comprises corresponding layers respectively coupled with all layers in the convolutional neural network (402) and with all the layers in the self-attention neural network.

8. The method according to any of claims 1 to 7, wherein the diagnostic data is generated based on sensor data of a vehicle.

9. A computer-readable storage medium having instructions stored therein, wherein the instructions, when executed by a processor, cause the processor to perform the method according to any one of claims 1 to 8.

10. A vehicle diagnosis device (20), comprising:
a memory (202) configured to store instructions; and
a processor (204) configured to execute the instructions to cause the method according to any one of claims 1 to 8 to be performed.

## Patentansprüche

1. Fahrzeugfehlerdiagnoseverfahren (10), umfassend:
Empfangen eines Graustufenbilds (30, 401), wobei das Graustufenbild (30, 401) Diagnosedaten für Fahrzeugdiagnose repräsentiert;
Extrahieren von Merkmalen aus dem Graustufenbild (30, 401), um eine Merkmalskarte (403) zu erzeugen;
Durchführen von Verarbeitung an der Merkmalskarte, um ein Klassifizierungsergebnis (407) zu erhalten, wobei das Klassifizierungsergebnis (407) einen Fahrzeugfehlerzustand angibt;
**dadurch gekennzeichnet, dass**
die Diagnosedaten Daten umfassen, die durch mindestens eine Quelle in einem Fahrzeug zu einer Vielzahl von Zeitpunkten erzeugt wurden;
die Merkmale aus dem Graustufenbild (30, 401) unter Verwendung eines Faltungsneuronalen Netzwerks (402) extrahiert werden;
das Klassifizierungsergebnis (407) durch Durchführen von selbstaufmerksamkeitsbasierter Verarbeitung an der Merkmalskarte (403) erhalten wird; und
das Verfahren ferner umfasst:
Durchführen einer Relevanzausbreitungsanalyse basierend auf dem Klassifizierungsergebnis (407), um eine Beitrags-Heatmap (409) zu erhalten, wobei die Beitrags-Heatmap (409) einen Grad des Beitrags jedes Bildpunkts in dem Graustufenbild (30, 401) zu dem Klassifizierungsergebnis (407) angibt.

2. Verfahren nach Anspruch 1, wobei die selbstaufmerksamkeitsbasierte Verarbeitung umfasst:
Eingeben der Merkmalskarte (403) in eine Multi-Head-Aufmerksamkeitsschicht (404) eines Self-Attention-Neuronalnetzwerks, um eine Merkmalsmatrix zu extrahieren;
Eingeben der Merkmalsmatrix in eine dichte Schicht (405) des Self-Attention-Neuronalnetzwerks, um eine spärliche Matrix zu erzeugen; und
Eingeben der spärlichen Matrix in eine vollständig verbundene und Softmax-Schicht (406) des Self-Attention-Neuronalnetzwerks, um das Klassifizierungsergebnis (407) zu erhalten.

3. Verfahren nach Anspruch 1 oder 2, wobei das Graustufenbild (30, 401) durch die folgenden Schritte erzeugt wird:
Extrahieren der Diagnosedaten;
Auswählen von gültigen Daten innerhalb einer im Voraus bestimmten Zeitperiode aus den Diagnosedaten durch Filtern;
Normalisieren jedes Werts in den gültigen Daten;
Abbilden jedes normalisierten Werts in den gültigen Daten auf eine Graustufe des Graustufenbilds (30, 401); und
Konstruieren des Graustufenbilds (30, 401) basierend auf der korrespondierenden Graustufe jedes normalisierten Werts in den gültigen Daten, wobei das Graustufenbild (30, 401) eine erste Dimension korrespondierend mit der Quelle und eine zweite Dimension korrespondierend mit dem Zeitpunkt aufweist.

4. Verfahren nach Anspruch 3, wobei Erzeugen des Graustufenbilds (30, 401) ferner die folgenden Schritte umfasst:
Ergänzen eines normalisierten Werts für jede Quelle während einer Ausschalt-Zeitperiode nach der Normalisierung; und
Durchführen von Filterung an jedem normalisierten Wert in den gültigen Daten.

5. Verfahren nach Anspruch 1 oder 2, ferner umfassend:
Empfangen eines Muster-Graustufenbilds (30, 401) und eines damit korrespondierenden Muster-Klassifizierungsergebnisses (407), wobei das Muster-Graustufenbild (30, 401) Muster-Daten für Fahrzeugdiagnose repräsentiert und das Muster-Klassifizierungsergebnis (407) einen Fahrzeugfehlerzustand angibt; und
Trainieren des Faltungsneuronalen Netzwerks (402) und des Self-Attention-Neuronalnetzwerks unter Verwendung des Muster-Graustufenbilds (30, 401) als eine Eingabe des Faltungsneuronalen Netzwerks (402) und des Muster-Klassifizierungsergebnisses (407) als eine Zielausgabe des Self-Attention-Neuronalnetzwerks.

6. Verfahren nach Anspruch 5, wobei die Muster-Daten Daten innerhalb einer im Voraus bestimmten Zeitperiode sind, die zu einem Zeitpunkt endet, zu dem das Auftreten eines Fehlers gemäß empirischen Regeln bestimmt wird, und das Muster-Klassifizierungsergebnis (407) ein Fahrzeugfehlerzustand ist, der gemäß den empirischen Regeln bestimmt wird.

7. Verfahren nach Anspruch 1 oder 2, wobei das Durchführen einer Relevanzausbreitungsanalyse basierend auf dem Klassifizierungsergebnis (407), um eine Beitrags-Heatmap (409) zu erhalten, umfasst:
Durchführen der Relevanzausbreitungsanalyse basierend auf dem Klassifizierungsergebnis (407) unter Verwendung eines Relevanzanalyse-Neuronalnetzwerks (408), wobei
das Relevanzanalyse-Neuronalnetzwerk (408) korrespondierende Schichten umfasst, die jeweils mit allen Schichten in dem Faltungsneuronalen Netzwerk (402) und mit allen Schichten in dem Self-Attention-Neuronalnetzwerk gekoppelt sind.

8. Verfahren nach einem der Ansprüche 1 bis 7, wobei die Diagnosedaten basierend auf Sensordaten eines Fahrzeugs erzeugt werden.

9. Computerlesbares Speichermedium, das darin gespeicherte Anweisungen aufweist, wobei die Anweisungen, wenn sie durch einen Prozessor ausgeführt werden, den Prozessor veranlassen, das Verfahren nach einem der Ansprüche 1 bis 8 durchzuführen.

10. Fahrzeugdiagnosevorrichtung (20), umfassend:
einen Speicher (202), der zum Speichern von Anweisungen konfiguriert ist; und
einen Prozessor (204), der konfiguriert ist, die Anweisungen auszuführen, um zu veranlassen, dass das Verfahren nach einem der Ansprüche 1 bis 8 durchgeführt wird.

## Revendications

1. Procédé de diagnostic de défaillance de véhicule (10), comprenant :
la réception d'une image en niveaux de gris (30, 401), dans lequel l'image en niveaux de gris (30, 401) représente des données de diagnostic pour un diagnostic de véhicule ;
l'extraction de caractéristiques à partir de l'image en niveaux de gris (30, 401) pour générer une carte de caractéristiques (403) ; et
la réalisation d'un traitement sur la carte de caractéristiques pour obtenir un résultat de classification (407),
dans lequel le résultat de classification (407) indique une condition de défaillance de véhicule ;
**caractérisé en ce que** :
les données de diagnostic comprennent des données générées par au moins une source dans un véhicule en une pluralité de points temporels ;
les caractéristiques sont extraites à partir de l'image en niveaux de gris (30, 401) en utilisant un réseau neuronal de convolution (402) ;
le résultat de classification (407) est obtenu en réalisant un traitement basé sur l'auto-attention sur la carte de caractéristiques (403) ; et
le procédé comprend en outre :
la réalisation d'une analyse de propagation de pertinence sur le résultat de classification (407) pour obtenir une carte thermique de contribution (409), dans lequel la carte thermique de contribution (409) indique un degré de contribution de chaque pixel dans l'image en niveaux de gris (30, 401) au résultat de classification (407).

2. Procédé selon la revendication 1, dans lequel le traitement basé sur l'auto-attention comprend :
l'entrée de la carte de caractéristiques (403) à l'intérieur d'une couche d'attention à multiples têtes (404) d'un réseau neuronal d'auto-attention pour extraire une matrice de caractéristiques ;
l'entrée de la matrice de caractéristiques à l'intérieur d'une couche dense (405) du réseau neuronal d'auto-attention pour générer une matrice creuse ; et
l'entrée de la matrice creuse à l'intérieur d'une couche softmax pleinement connectée (406) du réseau neuronal d'auto-attention pour obtenir le résultat de classification (407).

3. Procédé selon la revendication l ou 2, dans lequel l'image en niveaux de gris (30, 401) est générée au moyen des étapes suivantes :
l'extraction des données de diagnostic ;
la sélection de données valides à l'intérieur d'une période temporelle prédéterminée à partir des données de diagnostic par filtrage ;
la normalisation de chaque valeur dans les données valides ;
la cartographie de chaque valeur normalisée dans les données valides par rapport à un niveau de gris de l'image en niveaux de gris (30, 401) ; et
la construction de l'image en niveaux de gris (30, 401) sur la base du niveau de gris correspondant de chaque valeur normalisée dans les données valides, dans lequel l'image en niveaux de gris (30, 401) présente une première dimension qui correspond à la source et une seconde dimension qui correspond au point temporel.

4. Procédé selon la revendication 3, dans lequel la génération de l'image en niveaux de gris (30, 401) comprend en outre les étapes suivantes :
le fait de suppléer une valeur normalisée pour chaque source pendant une période temporelle de coupure après la normalisation ; et
la réalisation d'un filtrage sur chaque valeur normalisée dans les données valides.

5. Procédé selon la revendication l ou 2, comprenant en outre :
la réception d'une image en niveaux de gris échantillon (30, 401) et d'un résultat de classification échantillon (407) lui correspondant, dans lequel l'image en niveaux de gris échantillon (30, 401) représente des données échantillon pour un diagnostic de véhicule, et le résultat de classification échantillon (407) indique une condition de défaillance de véhicule ; et
l'apprentissage du réseau neuronal de convolution (402) et du réseau neuronal d'auto-attention en utilisant l'image en niveaux de gris échantillon (30, 401) en tant qu'entrée du réseau neuronal de convolution (402) et le résultat de classification échantillon (407) en tant que sortie cible du réseau neuronal d'auto-attention.

6. Procédé selon la revendication 5, dans lequel les données échantillon sont des données à l'intérieur d'une période temporelle prédéterminée qui se termine en un point temporel auquel la survenue d'une défaillance est déterminée conformément à des règles empiriques, et le résultat de classification échantillon (407) est une condition de défaillance de véhicule déterminée conformément aux règles empiriques.

7. Procédé selon la revendication l ou 2, dans lequel la réalisation d'une analyse de propagation de pertinence sur la base du résultat de classification (407) pour obtenir une carte thermique de contribution (409) comprend :
la réalisation de l'analyse de propagation de pertinence sur la base du résultat de classification (407) en utilisant un réseau neuronal d'analyse de pertinence (408), dans lequel
le réseau neuronal d'analyse de pertinence (408) comprend des couches correspondantes respectivement couplées à toutes les couches dans le réseau neuronal de convolution (402) et à toutes les couches dans le réseau neuronal d'auto-attention.

8. Procédé selon l'une quelconque des revendications l à 7, dans lequel les données de diagnostic sont générées sur la base de données de capteur d'un véhicule.

9. Support de stockage lisible par ordinateur comportant des instructions stockées en son sein, dans lequel les instructions, lorsqu'elles sont exécutées par un processeur, forcent le processeur à réaliser le procédé selon l'une quelconque des revendications 1 à 8.

10. Dispositif de diagnostic de véhicule (20), comprenant :
une mémoire (202) configurée pour stocker des instructions ; et
un processeur (204) configuré pour exécuter les instructions pour forcer la réalisation du procédé selon l'une quelconque des revendications 1 à 8.
